# EUROPEAN PATENT SPECIFICATION

(11) **EP 0 966 629 B1**
(45) Date of publication and mention of the grant of the patent: **26.02.2003**
(21) Application number: 98952943.3
(22) Date of filing: 16.11.1998
(51) Int. Cl.: F16L 21/04, F16L 25/00, F16L 23/02

(54) **UNIVERSAL HYDRAULIC COUPLING**
UNIVERSELLE HYDRAULISCHE KUPPLUNG
RACCORD HYDRAULIQUE UNIVERSEL

(30) Priority: 18.11.1997 IT BA970059
(43) Date of publication of application: 29.12.1999
(73) Proprietor: Tarantini, Arcangelo, 74013 Ginosa (IT)
(72) Inventor: Tarantini, Arcangelo, 74013 Ginosa (IT)
(86) International application number: IB9801825
(87) International publication number: WO99026008

(56) References cited:
- DE-A- 2 726 035
- GB-A- 2 310 698
- US-A- 3 288 495

## Description

### Technical field

The present invention relates to a universal hydraulic coupling for piping systems in every material (steel, cast iron, PVC, fiber cement, etc.) conveying fluids of any type.

In the state of the technique, concerning the above mentioned applications, there are already several realizations of couplings in metallic materials and comprising a centre sleeve, end flanges, bolts and sealing gaskets to prevent the leak of fluids at the pipe joints, or the inlet of air in case of underpressure installations.

The big drawback of the known applications is that the metal centre sleeve requires specialised protection treatments of the internal surface to prevent corrosion and contamination of the fluid conveyed (if potable). The problem has been dealt with, using protecting thermoplastic resins paints of various kind, without solving it because the manufacturing costs increase remarkably and because the protecting coating usually presents defects (scratches, holes, etc) that grow wider during the life of the product and cause the corrosion of the metallic surface in touch with the flowing fluid.

GB-A-2 310 698 describes a pipe coupling assembly for two spaced pipe ends.

### Disclosure of the invention

The aim of the invention is to join pipes of different diameters and materials due to the fact that the sleeve's ends are shaped in such a way to fit truncated-cone shaped sealing gaskets.

This aim is achieved by the coupling having the features of claim 1.

According to the further aim the invention can be used with large diameters and/or high working pressures: the sleeve, in fact, can be covered with a steel jacket to increase the mechanical resistance.

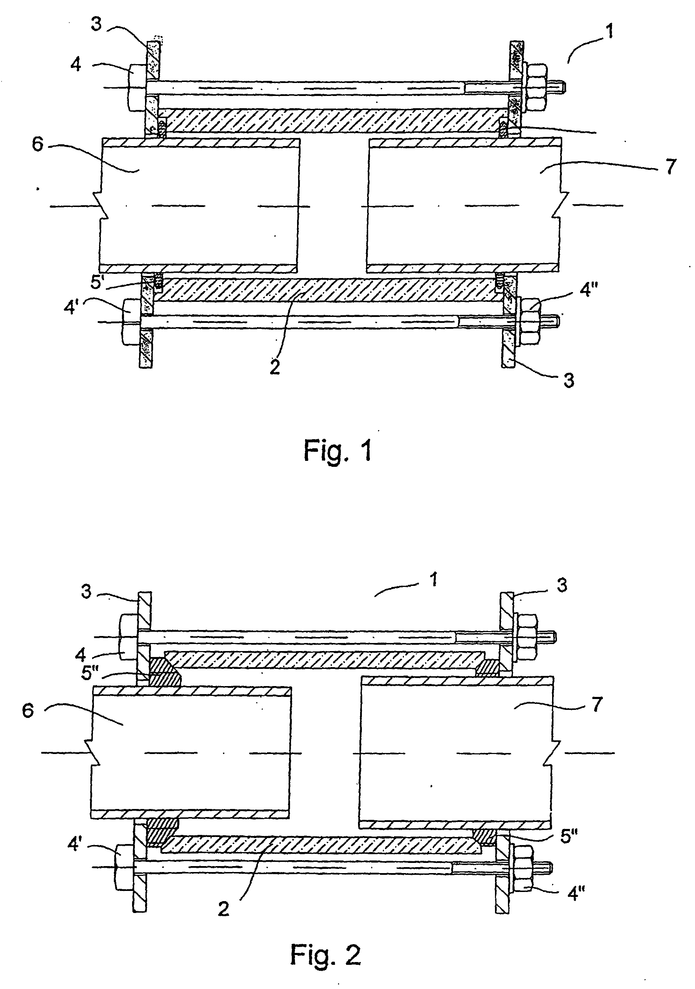

This and other advantages will appear in the detailed description of the invention referring to Fig 2, whereby Fig. 1 does not belong to the invention claimed.

### Way of carrying out the invention

With reference to Figs. 1 and 2 two generic pipes 6, 7 to be jointed are shown. With 1 the universal coupling is indicated, according to the invention, comprising a centre sleeve 2, made of plastic material, for example HD polyethylene, and two end flanges 3, suitable fasterners 4 and appropriate seals 5. In particular, the centre sleeve ends 2 can be shaped in such a way to fit truncated-cone shaped sealing gaskets 5" apt for the coupling of pipes that differ up to 25 mm in diameter. The use of plastic, for example polyethylene, to manufacture the centre sleeve provides a high flexibility in the production of every required diameter. If the diameter of the pipes to be jointed is quite large and/or the working pressure high, the present invention can be applied covering the sleeve 2 with a steel jacket to increase its mechanical resistance.

The truncated-cone shaped gaskets 5" in elastomer have a trapezoidal section and assure perfect seal due to their special configuration they assume once installed in the groove between the pipe 6 and 7, the sleeve 2 and the flange 3, with the further advantage to allow the coupling of pipes of different sizes and materials. The end flanges 3 can be made of metals, for example steeel or cast iron, or in plastic, while the fasteners 4 usually comprise a number of steel bolts 4 consisting of a screw 4' and a nut 4", or U-bolts and anything else.

## Claims

1. Universal coupling for coupling two pipes (6, 7) of piping systems comprising a centre sleeve 2, at least one end flange 3, suitable fasteners 4 and appropriate sealings, whereby said centre sleeve (2) is made of any plastic material in particular HD Polyethylene and whereby the ends of said centre sleeve 2 are shaped in such a way to fit truncated-cone shaped sealing gaskets 5'' **characterised in that** said truncated-cone shaped sealing gaskets (5") in use have the same external diameter but different internal diameter so as to fit themselves to the corresponding external different diameters of said pipes (6, 7).

2. Coupling according to the claim 1, **characterized by** the fact that said sleeve 2 is covered with a steel jacket to increase its mechanical resistance.

3. Coupling according to claims 1 or 2, **characterized by** the fact that said end flange 3 is made of steel.

4. Coupling according to claims 1, 2 or 3, **characterized by** the fact that said end flange 3 is made of cast iron.

5. Coupling according to claims 1, 2 or 3, **characterized by** the fact that said flange 3 is made of plastic material.

6. Coupling according to claims 1, 2 or 3, **characterized by** the fact that said fasteners 4 comprise a number of steel bolts 4 each consisting of a screw 4' and a nut 4".

## Patentansprüche

1. Universale Kupplung für die Verbindung zweier Röhren (6, 7) von Rohrleitungen, bestehend aus einer mittleren Muffe 2, aus mindstens einem Endeflansch 3, aus angebrachten Schließvorrichtungen 4 und angebrachten Dichtungen, wobei besagte mittlere Muffe (2) aus Kunststoff ist (in einzelnen aus HD Polyäthylen); die Enden der besagten mittleren Muffe (2) sind so gemodelt um eine Kegelstumpfdichtung (5") anzupassen, **dadurch gekennzeichnet, daß** die besagte Kegelstumpfdichtung (5") gleichen Außendurchmesser aber verschiedenen Innendurchmesser hat, um sich an den entsprechenden verschiedenen Außendurchmesser der besagten Röhren (6, 7) anzupassen.

2. Universale Kupplung nach Anspruch 1, **dadurch gekennzeichnet, daß** die besagte mittlere Muffe (2) mit einem Stahlmantel bedeckt ist, um ihre mechanische Festigkeit zu steigern.

3. Universale Kupplung nach den Ansprüchen 1 oder 2, **dadurch gekennzeichnet, daß** der besagte Endeflansch 3 aus Sthal ist.

4. Universale Kupplung nach den Ansprüchen 1, 2 oder 3, **dadurch gekennzeichnet, daß** der besagte Endeflansch 3 aus Gußeisen ist.

5. Universale Kupplung nach den Ansprüchen 1, 2 oder 3, **dadurch gekennzeichnet, daß** der besagte Endeflansch 3 aus Kunststoff ist.

6. Universale Kupplung nach den Ansprüchen 1, 2 oder 3, **dadurch gekennzeichnet, daß** die besagten Schließvorrichtungen 4 eine gewisse Nummer von Stahlbolzen 4 enthalten, die aus einer Schraube 4' und einer Mutter 4" bestehen.

## Revendications

1. Joint universel pour joindre deux tubes (6, 7) d'un système de conduites comprenant un manchon central 2, au moins une bride finale 3, fermetures appropriées 4 et garnitures d'étanchéité appropriées, donc dite manchon central (2) est fait d'un matériel plastique quelconque et donc en particulier HD Polyéthylène, les extrémités de le dit manchon central (2) sont faits de manière à s'adapter à une garniture d'étanchéité en forme de cône tronqué (5"), **caractérisé par le fait que** la dite garniture d'étanchéité en forme de cône tronqué (5") a le même diamètre externe mais diamètre interne différent de manière à s'adapter aux différents diamètres externes correspondants des dites tubes (6, 7).

2. Joint selon la revendication 1, **caractérisé par le fait que** le dit manchon 2 est couvert par une chemise d'acier pour augmenter sa résistance mécanique.

3. Joint selon les revendications 1 ou 2, **caractérisé par le fait que** la dite bride finale 3 est faite d'acier.

4. Joint selon les revendications 1, 2 or 3, **caractérisé par le fait que** la dite bride finale 3 est faite de fonte.

5. Joint selon les revendications 1, 2 or 3, **caractérisé par le fait que** la dite bride finale 3 est faite de matériel plastique.

6. Joint selon les revendications 1, 2 or 3, **caractérisé par le fait que** les dites fermetures 4 comprennent un nombre de boulons d'acier 4 formés par un vis 4' et un écrou 4".
